# EUROPEAN PATENT SPECIFICATION

(11) **EP 0 630 773 B1**
(45) Date of publication and mention of the grant of the patent: **21.05.1997**
(21) Application number: 94109166.2
(22) Date of filing: 15.06.1994
(51) Int. Cl.: B60H 1/34, F16C 11/12, B60H 1/00

(54) **Device for transmitting angular motion between two rotating elements with oblique axes, particularly for air vents of motor vehicles**
Vorrichtung zur Übertragung einer Drehbewegung zwischen zwei rotierenden Teilen mit zueinander schrägen Achsen, insbesondere für Luftaustritte von Kraftfahrzeugen
Dispositif pour transmettre un mouvement angulaire entre deux éléments en rotation avec des axes obliques, en particulier pour les buses d'aération de véhicules automobiles

(30) Priority: 22.06.1993 IT TO930450
(43) Date of publication of application: 28.12.1994
(73) Proprietor: FOGGINI PROGETTI S.r.l., I-10092 Beinasco Torino (IT)
(72) Inventor: Foggini, Paolo, I-10020 Revigliasco, Moncalieri(Torino) (IT); Davico, Claudio, I-10094 Giaveno, (Prov. of Torino) (IT)
(74) Representative: Modiano, Guido, Dr.-Ing.

(56) References cited:
- EP-A- 0 180 053
- FR-A- 2 671 520
- US-A- 3 388 611
- US-A- 3 405 539

## Description

The present invention relates to a device for transmitting angular motion between two rotating elements with oblique axes.

Although the device according to the invention is suitable for various uses, one of its typical applications concerns the air vents of motor vehicles, where said device is used, by way of example, to transmit the angular motion from the rotating control knob, located on the front base of the vent, to the butterfly valve which adjusts and interrupts the air flow and is located in the manifold of the vent.

The present description refers to this typical application, which however is non-limitative as regards the scope of the invention as defined by the claims.

Currently in conventional air vents as known from e.g. FR-A-2 671 520, angular motion is transmitted from the rotating control knob to the cutoff and adjustment valve by means of conventional kinematic systems that include connecting rods with spherical heads, cranks, slot links optionally associated with bevel gear pairs when the axis of the knob and the axis of the valve are at right angles to each other.

The use of said kinematic systems is evidently disadvantageous from an economical point of view, both due to the high manufacturing costs of the individual components of the kinematic system itself and due to the time required to assemble said components.

Furthermore, said kinematic systems are subject to breakages or jammings and generally wear tends to stiffen the rotary motion of the control knob.

The current trend towards shaping motor vehicle dashboards with ample curves furthermore forces to use air vents fitted with manifold ducts that are not straight, for example curved or slightly elbow-shaped and the like, and therefore the axes of the control knob and of the adjustment valve are often oblique or co-planar but incident. In these cases the use of the above mentioned conventional kinematic systems becomes troublesome and it is often necessary to locate said kinematic systems partly inside the manifold and partly outside it in order to straighten the curvature in the manifold itself, further increasing the manufacturing and assembly costs and decreasing the reliability of the control.

The aim of the present invention is to eliminate this and other drawbacks and within the scope of this general purpose the present invention has the important object of providing a transmission device which is economically advantageous from the point of view of manufacturing and assembly costs, has very limited dimensions and allows to transmit angular motion between two rotating elements regardless of their mutual arrangement.

In particular, in the case of air vents the device according to the invention allows to transmit angular motion from a rotating control knob to a flow cutoff and adjustment valve whose respective rotation axes are oblique or co-planar but incident.

Another important object of the invention is to provide a device for transmitting angular motion that can be obtained by molding polymeric thermoplastic material without requiring any further processing.

This aim, these objects and others which will become apparent hereinafter from the following detailed description of some embodiments of the invention are achieved with a device having the characteristics specified in the appended claims.

Substantially, the device according to the invention is constituted by a single transmission rod formed by several rod portions which are mutually connected by lamellar hinges; the respective hinging axes of at least two preferably consecutive hinges are mutually perpendicular. The rod is made of thermoplastic polymeric material and the laminar hinges are obtained by molding them monolithically with the portions that compose the rod. The end portions can be disk-shaped or flange-shaped and the like and can have a prism-shaped bore to key directly with a corresponding prism-shaped hub of the rotating element (knob and/or valve). As an alternative, one or both end portions can be shaped like a toothed sector to mesh with corresponding toothed sectors of the knob and/or shaft of the valve.

The invention will now be described in detail with reference to the accompanying drawings, given by way of non-limitative example, wherein:
- figure 1 is a perspective view of an air vent, with the transmission device according to an embodiment of the invention;
- figure 2 is a side elevation view of the transmission device shown in figure 1;
- figure 3 is a top plan view of figure 2;
- figure 4 is a perspective view of an air vent with the transmission device according to another embodiment of the invention;
- figure 5 is a side elevation view of the transmission device of figure 4;
- figure 6 is a top plan view of figure 5.

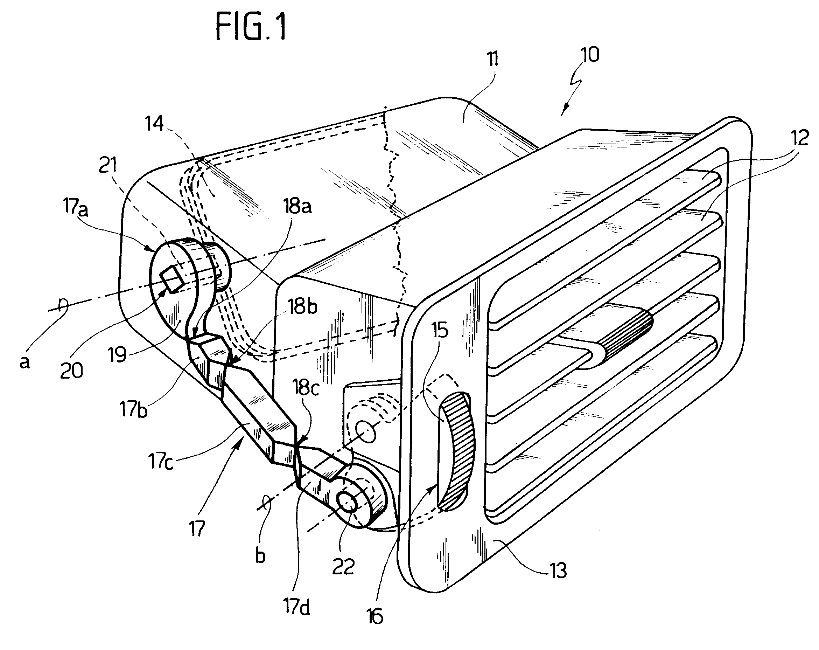

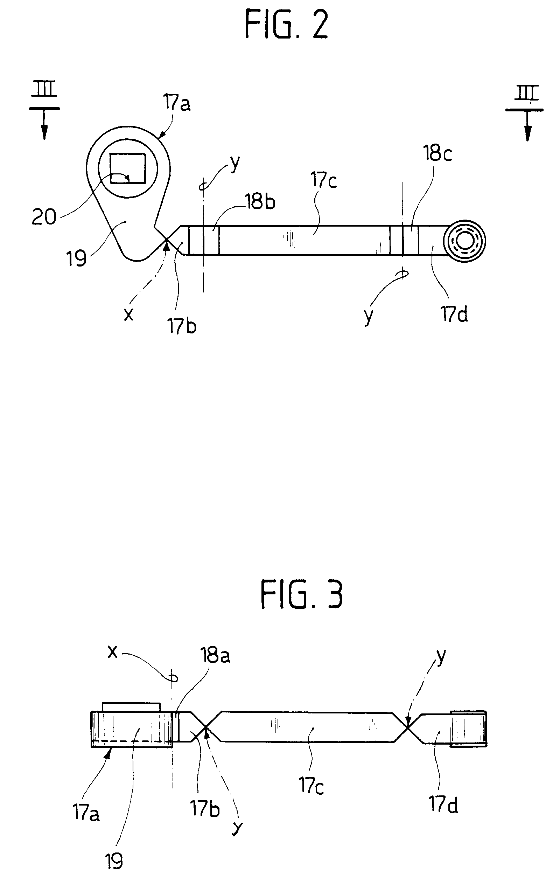

Initially with reference to figures 1 to 3, the reference numeral 10 designates an air vent for motor vehicles which comprises a manifold 11 that is meant to be connected to the air delivery duct, a flow orientation grille 12 and a front base 13.

As clearly shown in the figure, the manifold 11 is elbow-shaped and has, at its inlet section, a butterfly valve 14 for adjusting and interrupting the air flow. The valve 14 is rotatably suspended about an axis "a" which is perpendicular to the axis of the manifold within the section that contains the valve. At the front part of the vent and to the side of the manifold 11 there is a knob 15 which protrudes to allow grip from a slot 16 of the base 13 for actuating the valve 14.

The knob 15 is rotatably suspended about an axis "b" which is perpendicular to the axis of the manifold in the section that contains the knob.

Due to the elbow-shaped angle of the manifold 11, the axes "a" and "b" are incident, or even oblique if the axes of the elbow-shaped portions of the manifold are not co-planar. The transmission device according to the invention, generally designated by the reference numeral 17, is arranged between the knob 15 and the valve 14. Said device is substantially constituted by a single transmission rod formed by rod portions 17a-17b-17c-17d which are mutually connected by laminar hinges 18a-18b-18c; the respective hinging axes x-y of at least two of said hinges, preferably consecutive ones such as 18a-18b, are mutually perpendicular.

The above mentioned laminar hinges are obtained in a known manner by tapering the ends of the rod portions so as to form 45° planes until said ends are reduced to the thickness of a film measuring 2-4 tenths of a millimeter, which constitutes the hinge.

The transmission rod 17 is made of thermoplastic polymeric material and the laminar hinges 18a-18b-18c are obtained by molding monolithically with the portions 17a-17b-17c-17d. The end portion 17a is flange-shaped, with a crank-like extension 19 that ends with the hinge 18a for articulation to the adjacent portion 17b, whose hinging axis x is parallel to the rotation axis "a" of the valve 14. In said flange there is a central prism-shaped bore 20 used to key the end portion 17a directly with a corresponding prism-shaped hub 21 of the valve 14. The end portion 17d is in turn shaped like an eyelet and engages an eccentric pivot 22 supported by the knob 15. The hinging axes y of the intermediate hinges 18b-18c are mutually parallel and lie at right angles to the axes "a" and/or "b" for the rotation of the valve 14 and respectively of the knob 15 so that the transmission rod 17 can assume a curved configuration (figure 1) that is suitable to compensate any backward motion of the hub 21 with respect to the eccentric pivot 22, said backward motion being due to the angled arrangement of the manifold 11.

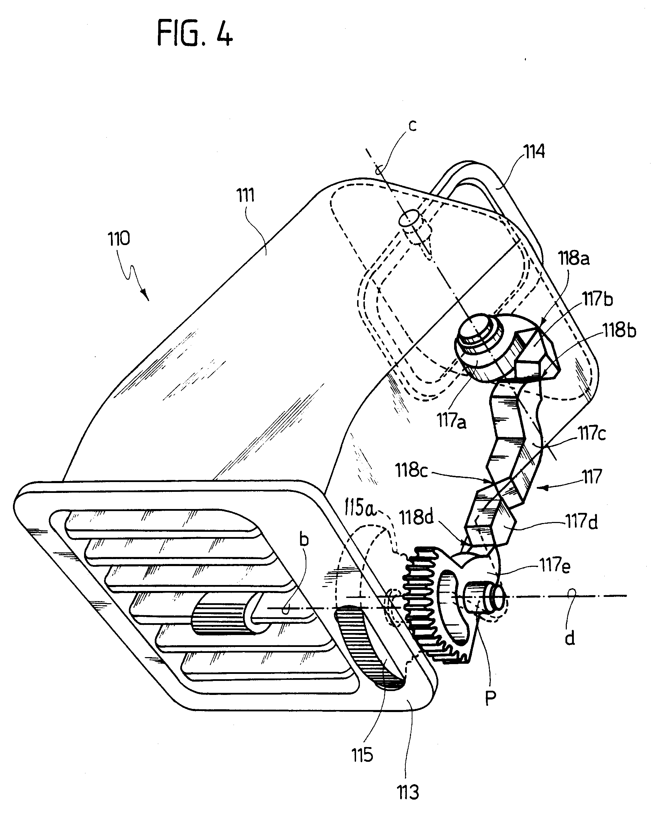

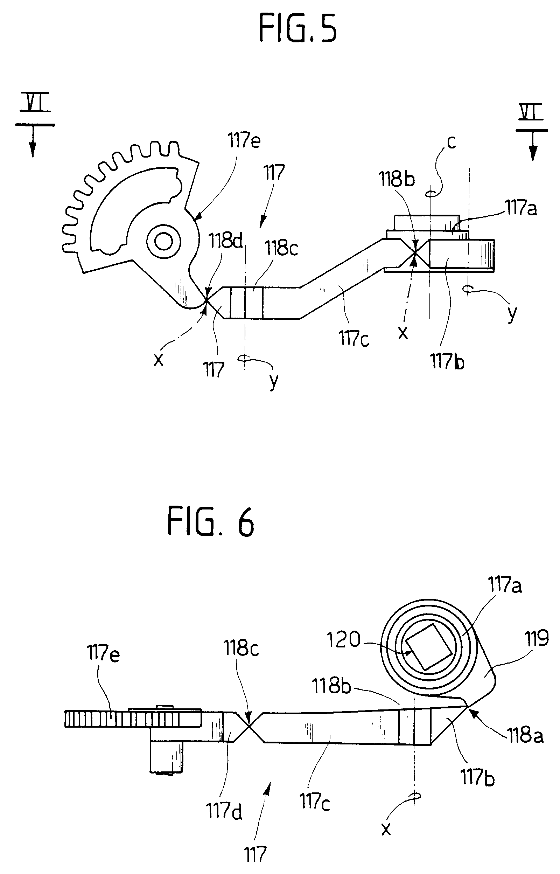

In the embodiment shown in figures 4 to 6, the manifold 111 of the vent 110 has a substantially curved axial configuration, and the valve 114 is rotatable about an axis "c" which lies at right angles to the axis "b" of the control knob 115 that protrudes from the base 113. The transmission device 117 is formed by five rod portions 117a-117b-117c-117d-117e connected by two pairs of laminar hinges 118a-118b and 118c-118d with mutually perpendicular hinging axes x-y. The end portion 117a, which also has a prism-shaped keying bore 120, is flange-shaped and has a crank-like extension 119 that ends with the hinge 118a, whose hinging axis y is parallel to the rotation axis "c" of the valve 114. The end portion 117e is shaped like a toothed sector, is rotatably supported by a pivot P, and meshes with a corresponding toothed sector 115a of the knob 115.

The axis x of the hinge 118d which connects said end portion 117e to the adjacent portion 117d is parallel to the axis "d" of the pivot P. The intermediate portion 117c forms an elbow in the vertical plane that contains the rotation axis "c" of the valve in order to compensate for the difference in elevation between the pivot P and the prism-shaped hub of the valve 114.

The description of the illustrated examples clearly shows that the transmission device according to the invention can be structured in various manners within a general inventive concept which entails the use of an articulated rod which is formed by said several portions that have any profile and are mutually connected by hinges formed monolithically with said portions, the respective hinging axes x-y of at least two consecutive hinges being mutually perpendicular.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for transmitting angular motion between two rotating elements with oblique axes, particularly for air vents of motor vehicles which comprise an air cutoff and adjustment butterfly valve (14, 114) located in the manifold (11, 111) of the vent (10, 110) and a rotating knob (15, 115) for actuating said valve which is located on the front base (13, 113) of said vent (10, 110), characterized in that it is constituted by a single articulated transmission rod (17, 117) formed by several rod portions (17a, 17b, 17c, 17d, 117a, 117b, 117c, 117d, 117e) which are mutually connected by laminar hinges (18a, 18b, 18c, 118a, 118b, 118c, 118d), the hinging axes of at least two preferably consecutive hinges (18a, 18b, 118a, 118b, 118c, 118d) being mutually perpendicular.

2. Device according to claim 1, characterized in that said articulated rod (17, 117) is made of thermoplastic polymeric material and in that the laminar hinges (18a, 18b, 18c, 118a, 118b, 118c, 118d), interposed between the portions (17a, 17b, 17c, 17d, 117a, 117b, 117c, 117d, 117e) that form the rod, are obtained by molding monolithically with said rod portions.

3. Device according to claims 1 and 2, characterized in that said articulated rod (17, 117) has at least one end portion (17a, 117a) that is flange-shaped and in that said flange has a prism-shaped bore (20, 120) for keying on a corresponding prism-shaped hub (21) of the rotating element and a crank-like extension (19, 119) that ends with the hinge (18a, 118a) for articulation to the adjacent rod portion (17b, 117b).

4. Device according to the preceding claims, characterized in that said articulated rod (17, 117) has at least one end portion (117e) that is shaped like a toothed sector and is suitable to mesh with a corresponding toothed sector (115a) of the rotating element.

5. Device according to the preceding claims, characterized in that the axis of the hinge (118d) that is adjacent to at least one of the end portions (117e) of the rod is parallel to the rotation axis (d) of the rotating element which is connected to said end portion.

6. Device according to the preceding claims, characterized in that the rod portions (17b, 17c) that lie between the end portions (17a, 17d) are straight.

7. Device according to claims 1 to 5, characterized in that at least some of the rod portions (117c) that lie between the end portions (117a, 117e) are bent so as to form an elbow or have an axis that follows a curve of any kind.

8. Device according to the preceding claims, characterized in that it comprises pairs of hinges (118a-118b, 118c-118d) for connecting the intermediate portions of the rod (117b, 117d) and in that the respective hinging axes of the hinges of each pair are mutually perpendicular.

9. Device for transmitting angular motion between two rotating elements with oblique axes according to the preceding claims, particularly for air vents of motor vehicles, characterized in that a rotating element is constituted by the butterfly valve (14, 114) for interrupting the air flow and the other rotating element is constituted by the rotating knob (15, 115) for actuating said valve.

## Patentansprüche

1. Vorrichtung zum Übertragen einer Drehbewegung zwischen zwei rotierenden Elementen mit geneigten Achsen, insbesondere für Luftauslässe von Kraftfahrzeugen, welche ein in der Sammelleitung (11, 111) des Auslasses (10, 110) angebrachtes Drosselventil (14, 114) zum Luftabsperren und -einstellen sowie einen auf der Vorderfläche (13, 113) des besagten Auslasses (10, 110) angeordneten Drehknopf (15, 115) zum Betätigen des besagten Ventils aufweisen,
**dadurch gekennzeichnet**, daß sie aus einem einzigen, drehbar angelenkten Übertragungsstab (17, 117) besteht, der aus mehreren Stabteilen (17a, 17b, 17c, 17d, 117a, 117b, 117c, 117d, 117e) gebildet ist, die über laminare Scharniere (18a, 18b, 18c, 118a, 118b, 118c, 118d) miteinander verbunden sind, wobei die Scharnierachsen von wenigstens zwei vorzugsweise aufeinanderfolgenden Scharnieren (18a, 18b, 118a, 118b, 118c, 118d) zueinander senkrecht stehen.

2. Vorrichtung nach Anspruch 1,
**dadurch gekennzeichnet**, daß der besagte drehbar angelenkte Stab (17, 117) aus thermoplastischem Kunststoffmaterial besteht und daß die zwischen den den Stab bildenden Stabteilen (17a, 17b, 17c, 17d, 117a, 117b, 117c, 117d, 117e) angeordneten laminaren Scharniere (18a, 18b, 18c, 118a, 118b, 118c, 118d) durch einstückiges Spritzgießen mit den besagten Stabteilen hergestellt werden.

3. Vorrichtung nach den Ansprüchen 1 und 2
**dadurch gekennzeichnet**, daß der besagte drehbar angelenkte Stab (17, 117) wenigstens ein Endteil (17a, 117a) aufweist, das flanschförmig ausgebildet ist, und daß der besagte Flansch eine prismenförmige Bohrung (20, 120), die auf eine entsprechende prismenförmige Nabe (21) des rotierenden Elementes aufkeilt, und eine kurbelförmige Verlängerung (19, 119) aufweist, die mit dem Scharnier (18a, 118a) zur drehbaren Anlenkung am benachbarten Stabteil (17b, 117b) endet.

4. Vorrichtung nach den vorhergehenden Ansprüchen,
**dadurch gekennzeichnet**, daß der besagte drehbar angelenkte Stab (17,117) wenigstens ein Endteil (117e) aufweist, das wie ein Zahnsegment ausgebildet und zum Kämmen mit einem entsprechenden Zahnsegment (115a) des rotierenden Elementes geeignet ist.

5. Vorrichtung nach den vorhergehenden Ansprüchen,
**dadurch gekennzeichnet**, daß die Achse des zu wenigstens einem der Endteile (117e) des Stabs benachbarten Scharniers (118d) zur Drehachse (d) des rotierenden, mit dem besagten Endteil verbundenen Elements parallel ist.

6. Vorrichtung nach den vorhergehenden Ansprüchen,
**dadurch gekennzeichnet**, daß die zwischen den Endteilen (17a, 17d) liegenden Stabteile (17b, 17c) gerade ausgebildet sind.

7. Vorrichtung nach den Ansprüchen 1 bis 5,
**dadurch gekennzeichnet**, daß wenigstens einige der zwischen den Endteilen (117a, 117e) liegenden Stabteile (117c) derart gebogen sind, daß sie einen Ellenbogen bilden oder eine einer Kurve irgendwelcher Art folgende Achse aufweisen.

8. Vorrichtung nach den vorhergehenden Ansprüchen,
**dadurch gekennzeichnet**, daß sie Paare von Scharnieren (118a, 118b, 118c, 118d) zum Verbinden der Zwischenteile (117b, 117d) des Stabs aufweist, und daß die jeweiligen Scharnierachsen jedes Paares zueinander senkrecht stehen.

9. Vorrichtung zum Übertragen einer Drehbewegung zwischen zwei rotierenden Elementen mit geneigten Achsen nach den vorhergehenden Ansprüchen, insbesondere für Luftauslässe von Kraftfahrzeugen,
**dadurch gekennzeichnet**, daß ein rotierendes Element aus dem Drosselventil (14,114) zum Unterbrechen der Luftströmung und das andere rotierende Element aus dem Drehknopf (15, 115) zum Betätigen des besagten Ventils besteht.

## Revendications

1. Dispositif pour transmettre un mouvement angulaire entre deux éléments rotatifs à axes obliques, en particulier pour des évents de véhicules à moteur qui comprennent un papillon (14, 114) de coupure et de réglage d'air situé dans la tubulure (11, 111) de l'évent (10, 110) et un bouton rotatif (15, 115) pour actionner ledit papillon qui se trouve sur la base antérieure (13, 113) dudit évent (10, 110), caractérisé en ce qu'il est constitué par une seule tige de transmission articulée (17, 117) formée par plusieurs parties (17a, 17b, 17c, 17d, 117a, 117b, 117c, 117d,117e) de tige reliées les unes aux autres par des charnières (18a, 18b, 18c, 118a, 118b, 118c, 118d) en forme de lames, les axes d'articulation d'au moins deux charnières de préférence consécutives (18a, 18b, 118a, 118b, 118c, 118d) étant mutuellement perpendiculaires.

2. Dispositif selon la revendication 1, caractérisé en ce que ladite tige articulée (17, 117) est en matière polymère thermoplastique et en ce que les charnières (18a, 18b, 18c, 118a, 118b, 118c, 118d) en forme de lames, intercalées entre les parties (17a, 17b, 17c, 17d, 117a, 117b, 117c, 117d,117e) qui forment latige, sont réalisées par moulage de manière monolithique avec lesdites parties de tige.

3. Dispositif selon les revendications 1 et 2, caractérisé en ce que ladite tige articulée (17, 117) a au moins une partie d'extrémité (17a, 117a) qui est en forme de flasque et en ce que ledit flasque à un alésage (20, 120) en forme de prisme destiné à s'emboîter sur un moyeu (21) en forme de prisme correspondant de l'élément rotatif et un prolongement (19, 119) analogue à une manivelle qui se termine par la charnière (18a, 118a) d'articulation avec la partie contiguë (17b, 117b) de la tige.

4. Dispositif selon les revendications précédentes, caractérisé en ce que ladite tige articulée (17, 117) a au moins une partie d'extrémité (117e) qui a une forme analogue à celle d'un secteur denté et qui est apte à engrener avec un secteur denté correspondant (115a) de l'élément rotatif.

5. Dispositif selon les revendications précédentes, caractérisé en ce que l'axe de la charnière (118d) contiguë à au moins une des parties d'extrémité (117e) de la tige est parallèle à l'axe de rotation (d) de l'élément rotatif relié à ladite partie d'extrémité.

6. Dispositif selon les revendications précédentes, caractérisé en ce que les parties (17b, 17c) de tige situées entre les parties d'extrémité (17a, 17d) sont rectilignes.

7. Dispositif selon les revendications 1 à 5, caractérisé en ce qu'au moins certaines des parties (117c) de tige situées entre les parties d'extrémité (117a, 117e) sont incurvées pour former un coude ou ont un axe qui suit une courbe de n'importe quel genre.

8. Dispositif selon les revendications précédentes, caractérisé en ce qu'il comporte des paires de charnières (118a-118b, 118c-118d) pour relier les parties intermédiaires de la tige (117b, 117d) et en ce que les axes d'articulation respectifs des charnières de chaque paire sont mutuellement perpendiculaires.

9. Dispositif pour transmettre un mouvement angulaire entre deux éléments rotatifs à axes obliques selon les revendications précédentes, en particulier pour des évents de véhicules à moteur, caractérisé en ce qu'un élément rotatif est constitué par le papillon (14, 114) pour interrompre le passage d'air et l'autre élément rotatif est constitué par le bouton rotatif (15, 115) pour actionner ledit papillon.
